# EUROPEAN PATENT SPECIFICATION

(11) **EP 3 551 963 B1**
(45) Date of publication and mention of the grant of the patent: **06.04.2022**
(21) Application number: 17826619.3
(22) Date of filing: 06.12.2017
(51) Int. Cl.: G01B 9/02, G01B 11/06, G02B 6/00

(54) **WAVEGUIDE INTERFEROMETER**
WELLENLEITERINTERFEROMETER
INTERFÉROMÈTRE À GUIDE D'ONDES

(30) Priority: 06.12.2016 PL 41970116
(43) Date of publication of application: 16.10.2019
(73) Proprietor: Inphotech Spolka z Ograniczona Odpowiedzialnoscia, 05-850 Oltarzew (PL)
(72) Inventor: NASILOWSKI, Tomasz, 00-172 Warszawa (PL); NAPIERALA, Marek, 01-476 Warszawa (PL); OSTROWSKI, Lukasz, 05-126 Nieporet (PL); SZOSTKIEWICZ, Lukasz, 97-100 Torun (PL); WYSOKINSKI, Karol, 81-589 Gdynia (PL); MAKOWSKA, Anna, 00-195 Warszawa (PL); PYTEL, Anna, 02-790 Warszawa (PL); MURAWSKI, Michal, 01-318 Warszawa (PL); BUDNICKI, Dawid, 09-540 Sanniki (PL); FIDELUS, Janusz, 34-106 Mucharz (PL); HOLDYNSKI, Zbigniew, 01-129 Warszawa (PL)
(86) International application number: PCT/PL2017/050059
(87) International publication number: WO 2018/106134

(56) References cited:
- WO-A1-2016/137344
- CN-A- 105 589 223
- US-A1- 2013 271 771
- AI ZHOU ET AL: "Asymmetrical Twin-Core Fiber Based Michelson Interferometer for Refractive Index Sensing", JOURNAL OF LIGHTWAVE TECHNOLOGY, IEEE SERVICE CENTER, NEW YORK, NY, US, vol. 29, no. 19, 19 October 2011 (2011-10-19), pages 2985-2991, XP011386829, ISSN: 0733-8724, DOI: 10.1109/JLT.2011.2165528
- Libo Yuan: "In-fiber integrated optic devices for sensing applications", , 17 October 2012 (2012-10-17), pages 1-5, XP055453943, SPIEDigitalLibrary.org/conference-proceedi ngs-of-spie DOI: 10.1117/12 Retrieved from the Internet: URL:http://dx.doi.org/10.1117/12 [retrieved on 2018-02-23]
- GAN LIN ET AL: "Spatial-Division Multiplexed Mach-Zehnder Interferometers in Heterogeneous Multicore Fiber for Multiparameter Measurement", IEEE PHOTONICS JOURNAL, IEEE, USA, vol. 8, no. 1, 1 February 2016 (2016-02-01), pages 1-8, XP011595805, DOI: 10.1109/JPHOT.2016.2516254 [retrieved on 2016-01-20] cited in the application
- R. KASHYAP ET AL: "An all single-mode fiber Michelson interferometer sensor", JOURNAL OF LIGHTWAVE TECHNOLOGY., vol. 1, no. 4, 31 December 1983 (1983-12-31), pages 619-624, XP055454077, US ISSN: 0733-8724, DOI: 10.1109/JLT.1983.1072153

## Description

The subject of this invention is an interferometer made on a multicore waveguide, particularly on waveguide, either fibrous or planar, the essence of which is to apply the core activation process, as disclosed below.

Measurement of geometric thickness of layers, carried out with the use of micrometric sets, requires a physical grasp of the entire layer to be assessed with a measuring instrument, which is difficult in the case of measurements of deformable elements or liquids. The use of this type of devices is also impossible when examining solutions or biological substances or when running biological tests, for instance when culturing and observing bacteria and viruses.

In turn, optical thickness is referred to as the length of the optical path and is expressed by the product of the geometric layer thickness and its refraction coefficient. This meaning of optical thickness shall be applied hereafter.

Examinations of substances of this type (deformable, liquids, etc.) are usually carried out under the microscope, which is time-consuming and requires the use of expensive and non-universal measuring and observation instruments. Performance of In-situ examinations is also significantly hindered.

Generally speaking, optical thickness measurements can be carried out with the use of interferometers. Hence, the known methods of measuring the thickness of phase elements include ones with the use of interferometers, e.g. the Michelson interferometer or the Mach-Zehnder interferometer. Volumetric interferometers cannot however measure in-situ changes in optical thickness for relatively small layers of several to several hundred nanometers or single micrometers.

Various structures of waveguide interferometers are known in technology, particularly those based on optical fiber. Also known are measurement methods assuming their use.

The structure of an optical fiber interferometer assuming the tapering of optical fiber was described in article titled "Tapered fiber Mach-Zehnder Interferometer for Liquid Level Sensing", written by Hun-Pin Change and associates, published by PIERS Proceedings in 2013. The structure of the element is based on the use of a standard single-mode fiber and the execution of two non-adiabatic taperings on this fiber. The idea behind the operation of this interferometer is based on the measurement of interference of these modes after the second tapering. The interferometer is used to measure liquid levels. Multicore waveguides are not used in this solution.

Article titled "Simple all-microconstructed-optical-fiber interferometer built via fusion splitting", written by Joel Villatoro and associates, published by the Optics Express in 2007, presents a single-core photonic fiber interferometer concept, whereby the fiber is spliced in two places to enclose openings serving as couplers.

A review article titled "Recent Progress of In-Fiber Integrated Interferometers", written by Libo Yuan and published by PhotonicSensors in 2011, presents a concept for Mach-Zehnder and Michelson interferometer structures based on tapered double-core fibers. The Michelson interferometer in the proposed structure has a mirror on the entire fiber terminal's face surface. Passing through a tapering and reflected off the mirror, signals interfere.

The concept of a local tapering of double-core fibers is also known from article titled "Gemini Fiber for Interferometry and Sensing Applications" by E. Zetterlund and associated, published in the Journal of Sensors in 2009. According to this concept, no substances are applied on the cores of optical fibers (i.e. the fibers are not activated). The example presented in the article is characterized by equal-measuring arms.

The structure of a multicore fiber interferometer was also described in article titled "All-solid multi-core fiber-based multipath Mach-Zehnder interferometer for temperature sensing", written by Ming Tang and associates and published in Applied Physics B in 2013. The authors point to the sensor application of the interferometer, which can be particularly used to measure temperature. In this concept, the optical fiber is spliced with an SMF-28 fiber by connecting to the intra-core casing instead of the centers of particular cores. In this case, the authors point to the application of multibeam interference. In traditional interferometers, splices made in intra-core spaces serve as couplers here.

Article entitled "Multicore microstructured optical fiber for sensing applications", written by L. Sojka and associates, published in Optics Communications in 2015, presents a concept for a multibeam Mach-Zehnder interferometer, based on seven-core microstructured fiber. Splices made at both ends of the fiber serve as couplers. The fiber used has coupled cores, thanks to which the effect of external factors on intra-core power transfer can be truly examined.

An idea for the structure of a multi-parameter sensor based on multicore fibers (spatial multiplexing), and specifically on multicore fibers with heterogeneous cores, was presented in article titled "Spatial-Division Multiplexed Mach-Zehnder Interferometers in Heterogeneous Multicore Fiber for Multiparameter Measurement", written by Lin Gan and associates and published in the IEE Photonics Journal in 2016. According to the concept, a Mach-Zehnder interferometer is built on seven-core fiber (two taperings). All seven cores are activated at the input by a fan-in/fan-out element. At the end of the system, power is collected from all cores by a fan-in/fan-out element as well. By changing the parameters of the tapering, other interference images are collected at the output, using a detector. This concept is dedicated to temperature and strain measurements, and the authors claim cross-sensitivity can be eliminated.

In another example of sensor structure, as presented in description ref. US4653906, a device comprising multicore fibers is used to measure strain. In this solution, a double-core fiber is fixed to a strain-transferring structure. Strains change the value of crosstalk among cores, which signals the strain affecting the optical fiber.

The concept of chemical etching of twin-core fiber was presented in A. Zhou al.: "Asymmetrical Twin-Core Fiber Based Michelson Interferometer for Refractive Index Sensing" published in Journal of Lightwave Technology in 2011. According to this concept an asymmetrical twin-core fiber based Michelson interferometer is reported as a refractive index sensor. One core of the twin-core fiber locates at the fiber center and the other core is 26pm away from the central core. Part of the cladding of the twin-core fiber over a small length is removed by chemical etching to make the effective refractive index of the fundamental mode of the side core is sensitive to the ambient refractive index.

The concept of sensing with etched area was disclosed in Libo Yaun "In-fiber integrated optic devices for sensing applications" published in Proc. SPIE 8421 in 2012. According to concept, based on an in-fiber integrated Michelson interferometer, a compact and small size accelerometer has been proposed and demonstrated, the working principle and basic configuration. Another example, by using a segment of eccentric twin-core fiber, an in-fiber integrated Mach-Zehnder interferometer may be consist inside in one fiber and used as refractive index sensor.

The concept of active layers was presented in description ref. CN105589223. According to concept, a multi-core fiber splitter having a phase modulation function, an optical waveguide formed on the substrate by a lithium niobate substrate having an optical effect, a modulation electrode for modulating a propagating light wave in the optical waveguide, for input. A multi-core optical fiber, a V-shaped groove, a ceramic substrate, and a single-core optical fiber for guiding the outgoing light; the input optical fiber adopts a three-core optical fiber, and three optical waveguides are formed by using lithium niobate crystal as a substrate, and are embedded on both sides of the optical waveguide. Parallel electrodes are guided by a single-core fiber for the output light. The invention adopts multi-core optical fiber as an input, which not only improves the density of the core, mechanical properties and temperature diffusion characteristics, but also increases the effective area of the core and improves the output power of the light.

In another example of sensor structure, as presented in description ref. US2013271771, an interference measurement device comprising a multi-core optical fiber having first and second ends, a light source, an optical receiver, a branching unit, a coupling unit, a measurement optical path, and a reference optical path and measures a physical quantity of an object to be measured on the measurement optical path. The light source and optical receiver are arranged on the first end side, while the measurement optical path and reference optical path are arranged on the second end side. The branching unit splits light from the light source into measurement light and reference light, while the coupling unit generates interference light between the measurement light having propagated through the measurement optical path and the reference light having propagated through the reference optical path. The optical receiver detects the intensity of the interference light.

The concept of tapering was presented in description ref. WO2016137344, a fiber optic coupler, containing a multi-core optical fiber with insulated cores, whereas core insulation is construed as the occurrence of zones characterized by reduced refractive index in the core neighborhood, characterized in that it contains at least one input optical fiber jointed to at least N-core multicore optical fiber with insulated cores, which is jointed to N output optical fibers, and core insulation is reduced in at least one section of the multicore optical fiber by reducing the dimensions of the reduced refractive index zone dimensions in the core neighborhood.

The concept of sensor based on Michelson interferometer was presented in R. Kashyap et al: "An All Single-Mode Fiber Michelson Interferometer Sensor" published in Journal of Lightwave Technology in 1983. According to a concept, a Michelson interferometer made from a single-mode fiber directional coupler with silver mirrors deposited on fiber ends is presented. This interferometer is simple to fabricate and has a theoretical visibility of unity, irrespective of the splitting ratio of the coupler. A theoretical analysis of its performance was described.

The above presented solutions based on interferometers made on multicore fibers are predominantly dedicated to strain and temperature measurements. They are however unsuitable for effective measurement of optical thickness of layers. The structures of their systems do not enable core activation either.

It was therefore the purpose of this invention to develop a waveguide interferometer, particularly an optical fiber interferometer, for measuring optical thickness and/or adsorption of thin layers. The use of waveguide interferometers opens technology to new possibilities, whereby interferometer tests are used in studies requiring significant miniaturization - such applications were not accessible for volumetric interferometers. Effective measurement with the use of the invention is possible thanks to the arm activation process, which is the essence of its operation. An additional advantage of the invention is that its concept, known from volumetric optics, is reinforced by the effect of interferometer imbalance. Another goal of the invention was to develop an interferometer structure, which would be also suitable for measuring other physical values, such as: temperature, elongation / expansion, strain, pressure, gas concentration and others. The changes of those values are further called the changes of environmental factor.

The aforementioned technical problems are solved according to the invention by a waveguide interferometer according to claim 1.

In general terms, the active substance changes its optical thickness and/or absorption by reacting with the environment. In particular, the active substance is a sorbent of chemical substances from the environment and/or a substance which swells / shrinks when exposed to external factors and/or a substance which binds chemical substances from the environment. The detector displays interference stripes in a spectral band (wavelength), the shift and/or contrast of which depends on the change of optical thickness and/or the absorption of the layer. In this case, a change of the optical thickness of the measured layer changes the position of the interference stripes.

Advantageously, the at least one chemically active substance is connectable to another substance.

Advantageously, the at least one chemically active substance, is detachable when exposed to environmental factors.

Advantageously, the at least one chemically active substance, is selected so that it changes thickness and/or absorption and/or refractive index when exposed to environmental factors.

Advantageously, the multicore waveguide has more than two cores.

Advantageously, one of the multicore waveguide's cores has a different length than the other core.

Advantageously, the at least one core of multicore waveguide has at least one dielectric section attached thereto. Preferably, the dielectric section is selected from a group including: glass pin, waveguide, optical fiber. In particular, a dielectric section (particularly glass, particularly a waveguide) is connected to at least one of the waveguide's cores, particularly a multicore optical fiber, using any of the known methods. The connection is made by splicing, gluing or butt-coupling. The dielectric section connected facilitates the selective activation of a selected waveguide core. In this beneficial embodiment of the invention, unbalancing the interferometer results in optimizing the sensitivity of the interferometer to accommodate the expected changes in the optical parameters of activating substances. It is particularly possible to activate this arm of the interferometer, to which the dielectric section is connected, by coating the face of the connected dielectric section with an active substance. In another beneficial embodiment of the invention, one of the cores of the multicore waveguide can have different lengths to the remaining cores, either factory-made, or made by means of a different method. Preferably, the light source emits broad-spectrum light, and comprises particularly a supercontinuum light source, a halogen lamp or a super-luminescence lamp. Analogous effects can be obtained by using tunable lasers. In a beneficial embodiment, the detector is a spectrum analyzer or an optical spectrometer. When using tunable laser, the photodiode can be advantageously used as a detector.

The interferometer advantageously has fan-in/fan-out element and more than one detector and the light source connected thereto. The signal is directed through a single-core optical fiber to one of the cores of a multicore optical fiber, which contains a coupler. In the multicore fiber, the signal is propagated in one of the cores until reaching the coupler, which splits it between both fiber cores. In one of the cores, the signal is reflected off the tip of the connected fiber, and the signal from the second core is reflected off the tip of the double-core fiber. Reflected light returns through the double-core fiber and the coupler mounted on it, and then reaches the detector through the circulator. The detector displays interference stripes in a spectral band (wavelength), the shift and/or contrast of which depends on the change of parameters of the connected optical fiber, which can result from: elongation, strain, temperature change and other factors. The coupler is made using any of the known methods, particularly by tapering and/or enclosing holes, if the optical fiber used has holes. The diameters of the cores of the optical fiber are selected in a manner that thanks to the coupler made, for wavelength λ1, light is propagated in the central core and in one of the external cores, and for wavelength λ2, light is propagated in the central core an in the second of the external cores.

The interferometer advantageously has a circulator having a first port connected to the light source, a third port connected to the signal detector and a second port connected to the multicore waveguide.

Advantageously, at least two of the cores are coated with different chemically active substances. This beneficial embodiment can be used to measure the optical thickness of various substance layers with the use of a single interferometer according to the invention.

Advantageously, the at least double-core waveguide is polarization-maintaining waveguide.

Advantageously, multicore waveguide is a multicore fiber and comprises holes between the first core and the second core. Also advantageously, the splitter is a coupler provided on the multicore waveguide has decreased crosswise dimension. Enclosing holes without tapering is understood as a measure, by which holes are enclosed without applying an additional stretching force. Nonetheless, when enclosing holes without applying this additional stretching force, the crosswise dimensions of the waveguide, particularly the optical fiber, are decreased (tapering), since glass sinks above the holes.

The interferometer advantageously has a circulator connected to the light source, detector and the multicore waveguide. Signal from the light source travels the optical fiber to the first circulator port. The second circulator port is connected to one of the cores of the multicore waveguide, particularly a double-core fiber, and the third port - to the detector. In this beneficial embodiment, a superluminescence diode or a supercontinuum source serve as the light source, and the detector preferably comprises a spectrometer. The optical fiber is connected to the multicore optical fiber containing a coupler made with the use of any known method, particularly by tampering and/or enclosing holes, if the optical fiber used has holes. One of the cores of the multicore waveguide is activated at its output by connecting a dielectric section, an optical fiber in this instance, using any of the known methods, particularly by splicing, gluing or butt-coupling. The activated core beneficially differentiates the optical paths of the interferometer arms.

The multicore waveguide used in the interferometer according to the invention is also understood as at least two optical fibers, at least single-core, set together, particularly in a capillary or its fixed on common substrate.

Advantageously the splitter is a planar lightwave circuit splitter (PLC) and the multicore waveguide is a planar lightwave circuit waveguide. In this beneficial embodiment, an equal-power splitter can be used for a specific wavelength and beneficial configuration of 2x2. Broad-spectrum light is used as the wave source. One of the outputs of the splitter is activated by applying initial layer thicknesses. The second splitter output is preferably factory extended or shortened and preferably hidden inside the splitter's housing to ensure the imbalance of the interferometer and stability of operation. From the light source, signal is directed through an optical fiber leading to the input splitter port. A detector is connected to the second input port through an input fiber. The detector preferably comprises an optical spectrum analyzer. Signal from the light source is divided by the PLC splitter and reflects off the layer and the tip of the extended arm, hidden in the housing. Reflecting off the tip and the layer, light returns on the same path, through the splitter. The detector displays interference stripes in a spectral band (wavelength), the shift and/or contrast of which depends on the change of optical thickness and/or the absorption of the layer. In this case, a change of the optical thickness of the measured layer changes the position of the interference stripes.

Chemically active substance advantageously comprises a substance selected of the group including yttrium oxide, perfluorinated polymer, hydrolyzed collagen, polystyrene, ethylcellulose.

The invention can be particularly used as a sensor for measuring physical parameters, particularly optical thickness and/or layer absorption, which can be used to determine their increases.

The subject of the invention can be used for direct measurements of optical thickness and/or layer absorption, or, indirectly, for measuring other physical values, which affect these layers (temperature, humidity, gas concentration and others). Using the invention, it is possible to measure other parameters, such as strain/elongation, pressure or temperature. One of the advantages of the invention is the possibility of studying nanometer changes in the thickness of optical layers. An additional advantage of the invention is the possibility of increasing the sensitivity of the interferometer by unbalancing its arms.

The embodiments of the invention presented below do not limit its possible variants, since the full scope of the present invention is only defined by the appended claims. In particular, the measured change of measured layer optical thickness and/or absorption cannot be caused by various external factors (temperature, elongation, pressure, shrinking, swelling, humidity, gas concentration, etc.). The method of causing a change in the optical thickness (thickness, refractive index) and/or absorption does not affect the physical operation principle of the invention, which is identical in all instances.

Particular embodiments of the invention were presented in a figure, in which:

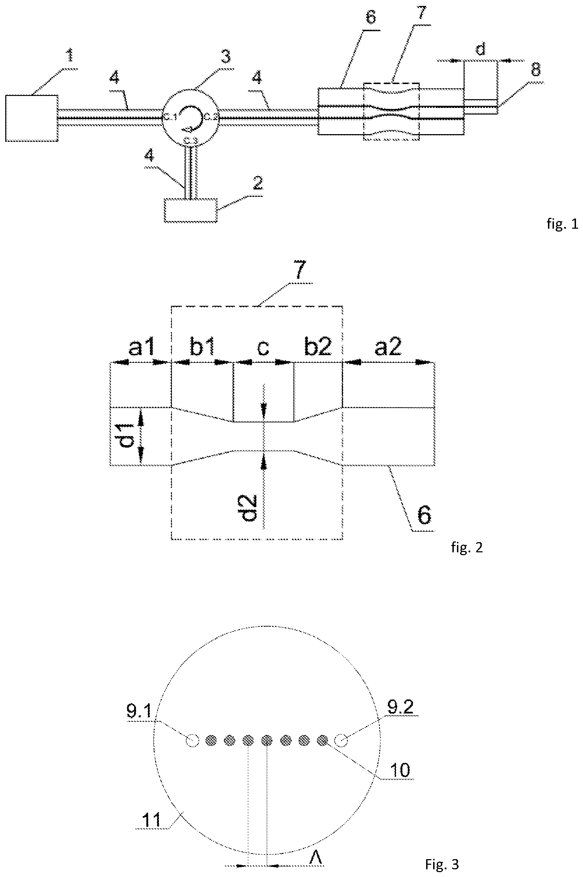

Fig. 1 presents in example 1 an example, which is not covered by the scope of the appended claims, where the following elements are visible: light source 1, detector 2, optical fiber circulator 3, single-core input fibers 4, multicore fiber 6, coupler 7 made on a multicore fiber 6, single-core fiber section 8 of d in total length, connected to one of the cores of a multicore fiber 6.
Fig. 2 presents a close-up on a beneficial embodiment of the coupler 7, made by tapering a multicore fiber, where fiber 6 of initial diameter d1 is tapered to diameter d2, whereas the proper tapering has the total length of c, and the transitional zones of the tapering - the falling and rising zone have total lengths of bl and b2. The length of the optical fiber outside the tapering equals, respectively, a1 and a2, counting from the light feed side and the side, on which the signal is reflected.
Fig. 3 presents the section of optical fiber 6, applicable to example 1, where microstructural elements - cores 9.1., 9.2 and holes 10 are lined at distances equaling Λ in casing 11.

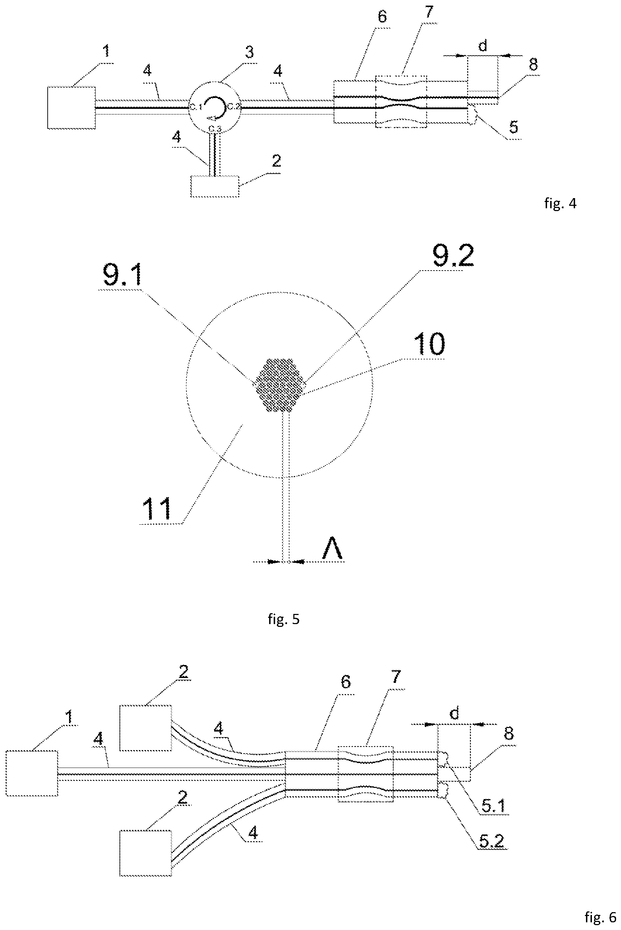

Fig. 4 presents a beneficial embodiment of the invention in examples 2 and 6, where the following examples are possible: light source 1, detector 2, optical fiber circulator 3, single-core input fibers 4, activating layer applied on one of the cores 5, multicore fiber 6, coupler 7 made on the multicore fiber 6, single-core fiber section 8 of d in total length, connected to one of the cores of the multicore fiber 6.
Fig. 5 presents the section of optical fiber 6, applicable to example 2, where microstructural elements - cores 9.1., 9.2 and holes 10 are lined at distances equaling Λ in casing 11.
Fig. 6 presents a beneficial embodiment of the invention in example 3, where the following elements are visible: light source 1, detector 2, single-core input fibers 4, activating layers 5.1 and 5.2 applied on two of the cores , multicore fiber 6, coupler 7 made on the multicore fiber 6, single-core fiber section 8 of d in total length, connected to one of the cores of the multicore fiber 6.

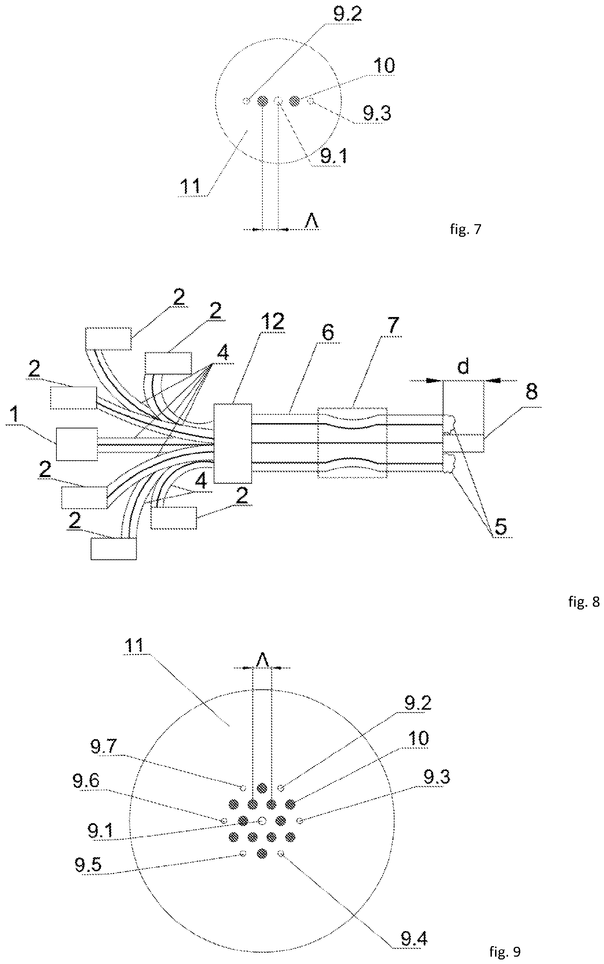

Fig. 7 presents the section of optical fiber 6, applicable to example 3, where microstructural elements - cores 9.1., 9.2 and 9.3 and holes 10 are lined at distances equaling Λ in casing 11.
Fig. 8 presents a beneficial embodiment of the invention in example 4, where the following elements are visible: light source 1, detector 2, single-core input fibers 4 connected to multicore fiber 6 through a fan-in/fan-out element 12, activating layer 5 applied on two of the cores, multicore fiber 6, coupler 7 made on a multicore fiber 6, section of single-core fiber 8 of d in total length, connected to one of the cores of the multicore fiber 6.
Fig. 9 presents the section of optical fiber 6, applicable to example 4, where microstructural elements - cores 9.1., 9.2, 9.3, 9.4, 9.5, 9.6, 9.7 and holes 10 are placed on the nodes of a hexagonal lattice at distances equaling Λ in casing 11.

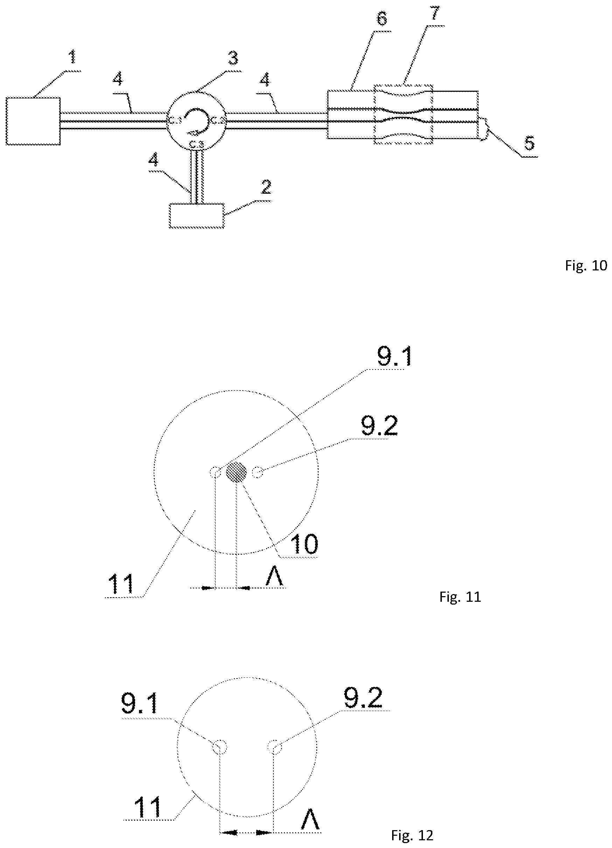

Fig. 10 presents a beneficial embodiment of the invention in example 4, where the following elements are visible: light source 1, detector 2,polarization-preserving fiber circulator 3, polarization-preserving single-core input fibers 4, activating layer 5 applied on two of the cores, multicore fiber 6, coupler 7 made on a multicore fiber 6.
Fig. 11 presents the section of optical fiber 6, applicable to example 5, where microstructural elements - cores 9.1., 9.2 and holes 10 are lined at distances equaling Λ in casing 11.
Fig. 12 presents the section of optical fiber 6, applicable to example 6, where cores 9.1, 9.2 are lined at distances equaling Λ in casing 11.

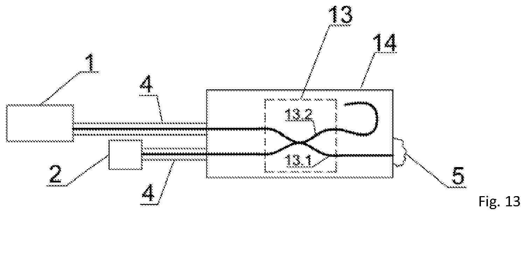

Fig. 13 presents a beneficial embodiment of the invention from example 7, where the following elements are visible: light source 1, detector 2, PLC splitter 13 with two output arms 13.1 and 13.2, which is placed in a housing 14 and activating layer 5 applied on the tip of one of the arms.

### Example 1

A source 1 is connected through an optical fiber 4 to the first circulator 3 port C.1, and optical fibers 4 connected to the second port C.2 are also connected to a double-core fiber 6 with a coupler 7 made on it, and the face of one of the cores of double-core fiber 6 is activated by splicing in a section of an optical fiber 8. A detector is connected to the third circulator 3 port C.3 through an optical fiber 4.

Signal from light source 1 travels optical fiber 4 to the first circulator 3 port C.1. The second circulator 3 port C.2 is connected to one of the cores of a multicore fiber 6 by means of optical fibers 4, and the third port C.3 - to a detector 2. A superluminescence diode serves as the light source 1, and the detector preferably comprises a spectrometer. One of the cores of the multicore fiber 6 is activated at its output by connecting an optical fiber 8 using any of the known methods, particularly by splicing. The activated core beneficially differentiates the optical paths of the interferometer arms.

The optical fiber comprises:
- two cores 9.1 and 9.2 made of SiO₂ doped with GeO₂ of 8.2 µm in total diameters, doped with 3.5 molar % GeO₂.
- A casing 11 of d1=125 µm in total diameter, made of non-doped SiO₂ silica;
- seven air holes between the cores, of 7.2 µm in total diameter.

The core and the holes are lined together, and their centers are spanned every Λ = 9 µm.

The length of the tied-in optical fiber 8 section is 1 mm.

The coupler 7 is made as a tapering with hole enclosing. The parameters of the tapering are: b1=7mm, c=10 mm, b2=8 mm. The fiber is tapered in a manner that d2 = 0.3 · d1.

Leaving the second circulator 3 port C.2, the signal is directed through a single-core optical fiber 4 to one of the cores of a multicore optical fiber 6, which contains the coupler 7. In the multicore fiber 6, the signal is propagated in one of the cores until reaching the coupler, which splits it preferably between both fiber 6 cores. In one of the cores, the signal is reflected off the tip of the connected fiber 8, and the signal from the second core is reflected off the tip of the double-core fiber. Reflected light returns through the double-core fiber 6 and the coupler 7 mounted on it, and then reaches the detector 2 through the circulator 3. The detector displays interference stripes in a spectral band (wavelength), the shift and/or contrast of which depends on the change of parameters of the connected optical fiber 8. In this case, the measured change of position of interference stripes is approx. 5 nm for section 8 elongation by approx. 1 µε.

### Example 2

A source 1 is connected through an optical fiber 4 to the first circulator 3 port C.1, and optical fibers 4 connected to the second port C.2 are also connected to a double-core fiber 6 with a coupler 7 made on it, and the face of one of the cores of double-core fiber 6 is activated by coating 5, and a section of an optical fiber 8. A detector is connected to the third circulator 3 port C.3 through an optical fiber 4.

Signal from light source 1 - a super electroluminescence diode - travels the single-core optical fiber 4 to the circulator 3. The second circulator 3 port C.2 is connected to one of the cores of a double-core fiber 6 with homogeneous cores 9.1 and 9.2 by means of single-core optical fibers 4. The third port C.3 leads to a detector 2 - a spectrum analyzer in the form of a spectrometer. Optical fiber 4 is connected to the double-core fiber 6 which contains the coupler 7 made by enclosing holes without additional tapering. One of the cores of the multicore fiber 6 is activated at its output by applying a layer 5. A section of a single-core fiber 8 is connected to the second core 9.1 of the multicore fiber 6.

The optical fiber comprises:
- two doped cores 9.1 and 9.2 made of SiO₂ doped with 3,5% GeO₂ of 8.2 µm in total diameters, the distance between cores is 126 µm
- a casing 11 of d1=250 µm in total diameter, made of non-doped SiO₂ silica;
- air holes 10 placed with the cores on nodes of a hexagonal lattice with a lattice constant of Λ = 18 µm, whereas d/Λ = 0,8, i.e. the diameters of the holes are 0,8 · Λ.

The coupler 7 is made by enclosing holes at the length of 3mm without additional tapering. The single-core fiber section 8 spliced to the double-core fiber is characterized with the same doping and core dimensions as cores 9.1 and 9.2 and is 50 µm long.

The substance used applied on the core 9.2 is perfluorinated polymer with a refractive index of approx. 1.33. Substance 5 can be placed on the core 9.2 by immersing the fiber in the polymer solution. Exposed to the effects of cooling media comprising carbon, chlorine and fluoride compounds, such as 1,1,2-Trichloro-1,2,2-trifluoroethane, the layer swells. In this configuration, the thickness of the substance changes by approx. 10 nm, which corresponds to a stripe shift by approx. 2 nm.

Leaving the second circulator 3 port C.1, the signal is directed through a single-core optical fiber 4 to the double-core optical fiber 6, which contains the coupler 7. In the double-core fiber 6, the signal is propagated in one of the cores until reaching the coupler 7, which splits it between the fiber cores. In one of the cores, the signal is reflected off the tip of the connected fiber 8, and the signal from the second core is reflected off the layer 5 on its tip. Reflected light returns through the double-core fiber 6 and the coupler 7 mounted on it, and then reaches the detector 2 through the circulator 3. The detector displays interference stripes in a spectral band (wavelength), the shift and/or contrast of which depends on the change of optical thickness and/or layer 5 absorption.

### Example 3

A source 1 is connected through an optical fiber 4 to the input of one of the cores of a three-core fiber 6, with a coupler 7 made on it, and a glass pin is spliced to one of the cores, behind the coupler, and the remaining faces of three-core fiber 6 cores are activated by applying layers 5.1 and 5.2, and the cores of the three-core fiber 6 are connected to detectors 4 by means of fibers 4 on the side of the light source.

Signal from light source 1 is directed to one of the cores of the three-core fiber 6. A supercontinuum source serves as the light source 1 and enters light through the single-core input fiber 4 to the central core of the three-core fiber. Detectors are connected to the remaining cores of the fiber 6 by means of input fibers 4. A coupler 7 is made on the three-core fiber 6, and two of the cores are activated at their outputs by applying initial layer thicknesses 5.1 and 5.2. A glass pin section 8 is spliced to the third of the cores. Signal in the multicore fiber 6 is propagated in one of the cores until it reaches the coupler 7, which splits the signal among the three fiber cores.

The coupler 7 is made by enclosing holes in optical fiber 6 without additional tapering.

The optical fiber comprises:
- three cores 9.1, 9.2 and 9.3 made of SiO₂ doped with GeO₂: the central core 9.1 of 8.2 µm in total diameter is doped with 3.5 molar % GeO₂, the side core 9.2 of 6.1 µm in total diameter is doped with 4.5 molar % GeO₂, the side-core 9.3 of 6.24 µm in total diameter is doped with 4.5 molar % GeO₂,
- a casing 11 of d1=125 µm in total diameter, made of non-doped SiO₂ silica;
- seven air holes between the cores, of 10 µm in total diameter.

The cores 9 and the holes 10 are lined together, and their centers are spanned every Λ = 20 µm.

The coupler 7 is made by enclosing holes at the length of 5 mm without additional tapering. The diameters of the fiber are selected in a manner that thanks to the coupler made, at wavelength of 1.57 µm, light propagated in the central core 9.1 and one of the external cores 9.3, and at wavelength of 1.45 µm, light propagates in the central core 9.1 and in the second of the external cores 9.2. The glass pin section 8 spliced to the three-core fiber 6 is 80 µm long and is made of silica.

The substance 5.1 applied on the core 9.2 is Yttrium oxide, characterized by small porosity and a refractive index of approx. 1.8. Substance 5.1 can be obtained with the use of high-power laser pulses shot at the Yttrium oxide in a manner that its vapors settle on the fiber. A layer made in this manner can serve as a hydrochloric acid flooding sensor. When exposed to the effects of hydrochloric acid, the thickness of the layer changes by approx. 50 nm, which causes a shift of the stripes by approx. 5 nm.

At the same time, the substance applied on the core 9.2 is perfluorinated polymer with a refractive index of approx. 1.33. Substance 5 can be placed on the core 9.2 by immersing the fiber in the polymer solution. Exposed to the effects of cooling media comprising carbon, chlorine and fluoride compounds, such as 1,1,2-Trichloro-1,2,2-trifluoroethane, the layer swells. In this configuration, the thickness of the substance changes by approx. 10 nm, which corresponds to a stripe shift by approx. 2 nm. After the light has passed through the coupler 7, it is propagated in particular cores and, reflecting off the measured layers 5.1 and 5.2 and the connected fiber 8, returns on the same path through the multicore fiber 6 to the detectors 2.

The detectors display interference stripes in a spectral band (wavelength), the shift and/or contrast of which depends on the change of optical thickness and/or absorption of layers 5.1 and 5.2.

### Example 4

A source 1 is connected through an optical fiber 4 to the input of one of the cores of a seven-core fiber 6 through a fan-in/fan-out element, and a coupler 7 is made on the seven-core fiber, and a glass pin is spliced to the face of central core 9.1, and the faces of the external cores of the seven-core fiber 6 are activated by applying layers 5, and the cores of the seven-core fiber 6 are connected to detectors 2 on the side of the light source by means of fibers 4, after having passed through a fan-in/fan-out element 12.

Signal from the light source is directed to one of the cores of the seven-core fiber 6. A supercontinuum source serves as the light source, which directs the light through a single-core input fiber 4 to the central core of a multicore fiber 6. Detectors 2 are connected to the remaining optical fiber cores through input fibers 4. Detectors 2 can be connected to each of the fibers or a single detector can be switched in between optical fibers, e.g. manually or with the use of an optical switch. The coupler 7 is made on the seven-core fiber 6, and the external cores are are activated at their outputs by applying initial layer 5 thicknesses. A glass pin section 8 is spliced to the central core 9.1. In the seven-core fiber 9.1, signal is propagated in one of the cores until it reaches the coupler, which splits the signal among the fiber cores.

The coupler is made by means of enclosing holes in optical fiber 6 without additional tapering. The diameters of the cores of the optical fiber are selected in a manner that thanks to the coupler made, particular wavelengths are propagated in the central core and in particular external cores.

The optical fiber comprises:
- seven cores 9.1, 9.2, 9.3, 9.4, 9.5, 9.6 and 9.7 made of SiO₂ doped with GeO₂:
   central core 9.1 of 8.2 µm, doped with 3.5 molar % GeO₂,
   external core 9.2 of 6.24 µm, doped with 4.5 molar % GeO₂,
   external core 9.3 of 6.1 µm, doped with 4.5 molar % GeO₂,
   external core 9.4 of 5.96 µm, doped with 4.5 molar % GeO₂,
   external core 9.5 of 5.82 µm, doped with 4.5 molar % GeO₂,
   external core 9.6 of 5.86 µm, doped with 4.5 molar % GeO₂,
   external core 9.7 of 5.54 µm, doped with 4.5 molar % GeO₂,
- a casing 11 of d1=300 µm in total diameter, made of non-doped SiO₂ silica;
- air holes between the cores, of 10 µm in total diameter.

The cores are placed on nodes of a hexagonal lattice with a lattice constant of A = 20 µm.

The coupler 7 is made by enclosing holes at the length of 10 mm without additional tapering. The diameters of the fiber are selected in a manner that thanks to the coupler made:
- wavelengths of approx. 1.57 µm propagate in the 9.1 and 9.2 core couple,
- wavelengths of approx. 1.45 µm propagate in the 9.1 and 9.3 core couple,
- wavelengths of approx. 1.35 µm propagate in the 9.1 and 9.4 core couple,
- wavelengths of approx. 1.25 µm propagate in the 9.1 and 9.5 core couple,
- wavelengths of approx. 1.15 µm propagate in the 9.1 and 9.6 core couple,
- wavelengths of approx. 1.05 µm propagate in the 9.1 and 9.7 core couple.

The glass pin section 8 is 100 µm long and is made of silica.

The substance 5 applied is hydrolyzed collagen with a refractive index of 1. Substance 5 is applied by immersing the fiber in a 1% water solution of hydrolyzed collagen and drying it. This configuration is used to measure humidity, as collagen swells when exposed to cold water and airborne humidity. Immersed in water at 20°C, collagen swells, changing its thickness from 100 nm to 200 nm, and causing stripes to shift by approx. 2 nm. After passing through the coupler 7, the light is further propagated in particular cores and, reflecting off the measured layers 5 and the connected fiber 8, returns on the same path, through the multicore fiber 6, to the detectors 2. The detector displays interference stripes in a spectral band (wavelength), the shift and/or contrast of which depends on the change of optical thickness and/or the absorption of the measured layers 5. In this case, a change of the optical thickness of the measured layer changes the position of the interference stripes.

### Example 5

A source 1 is connected through a polarization-preserving optical fiber 4 to the first polarization-preserving circulator port C.1, and polarization-preserving optical fibers 4 connected to the second port C.2 are also connected to a double-core fiber 6 with a coupler 7 made on it, and the face of one of the cores of double-core fiber 6 is activated applying a layer 5. A detector is connected to the third circulator 3 port C.3 through an optical fiber 4.

Signal from light source 1 travels optical fiber 4 to the first circulator 3 port C.1. The circulator 3 is a polarization-preserving circulator. The second circulator 3 port C.2 is connected to one of the cores of a double-core fiber 6 by means of polarization-preserving optical fibers 4. A superluminescence diode serves as the light source 1.

Leaving the second circulator 3 port C.2, the signal is directed through a polarization-preserving single-core optical fiber 4 to one of the cores of a multicore optical fiber 6, which contains the coupler 7. In the multicore fiber 6, the signal is propagated in one of the cores until reaching the coupler, which splits it preferably between both fiber 6 cores. In one of the cores, the signal is reflected off the tip of the connected fiber 6, and the signal from the second core is reflected off the layer 5 at its tip. Reflected light returns through the double-core fiber 6 and the coupler 7 mounted on it, and then reaches the detector 2 through the circulator 3. The detector displays interference stripes in a spectral band (wavelength), the shift and/or contrast of which depends on the change of optical thickness and/or the absorption of the layer 5. In this case, a change of the optical thickness of the measured layer 5 changes the position of the interference stripes.

The coupler is made using any of the known methods, in particular by tapering and enclosing holes.

The optical fiber comprises:
- two cores 9.1 and 9.2 made of SiO₂ doped with 3,5 molar % GeO₂ of 8.2 µm in total diameters,
- a casing 11 of d1=125 µm in total diameter, made of non-doped SiO₂ silica;
- an air hole between the cores of 15 µm in total diameters.

The core and the holes are lined together, and their centers are spanned every Λ = 15 µm. The double-core fiber 6 is a polarization-preserving fiber.

The coupler 7 is made as a tapering with hole enclosing. The parameters of the tapering are: b1=b2=5 mm, c=5mm. The fiber is tapered in a manner that d2 = 0.6 · d1.

The substance 5 applied is polystyrene with a refractive index of approx. 1.5. Substance 5 is applied on the fiber by immersing the fiber in a 1% solution of methylene chloride and drying it. The layer swells when exposed to acetone, which is why the sensor can be used as acetone sensor. Immersed in roomtemperature acetone, the layer increases its thickness by approx. 900 nm and causes the stripes to shift by approx. 120 nm.

### Example 6

A source 1 is connected through an optical fiber 4 to the first circulator port C.1, and an optical fiber 4 connected to the second port C.2 is also connected to a double-core fiber 6 with a coupler 7 made on it, and the face of one of the cores 9.1 of double-core fiber 6 is activated by coating with an active substance. A detector is connected to the third circulator 3 port C.3 through an optical fiber 4.

Signal from light source 1 travels optical fiber 4 to the first circulator 3 port C.1. The second circulator 3 port C.2 is connected to one of the cores of a double-core fiber 6 by means of optical fibers 4. A superluminescence diode serves as the light source 1.

Leaving the second circulator 3 port C.2, the signal is directed through a single-core optical fiber 4 to one of the cores of a multicore optical fiber 6, which contains the coupler 7. In the multicore fiber 6, the signal is propagated in one of the cores until reaching the coupler, which splits it preferably between both fiber 6 cores. In one of the cores, the signal is reflected off the tip of the connected fiber 8, and the signal from the second core is reflected off the layer 5 at its tip. Reflected light returns through the double-core fiber 6 and the coupler 7 mounted on it, and then reaches the detector 2 through the circulator 3. The detector displays interference stripes in a spectral band (wavelength), the shift and/or contrast of which depends on the change of optical thickness and/or the absorption of the layer 5. In this case, a change of the optical thickness of the measured layer 5 changes the position of the interference stripes.

The coupler is made using any of the known methods, in particular by tapering.

The optical fiber comprises:
- two cores 9.1 and 9.2 made of SiO₂ doped with 3,5 molar % GeO₂ of 8.2 µm in total diameters,
- a casing 11 of d1=125 µm in total diameter, made of non-doped SiO₂ silica;

The cores are lined together, and their centers are spanned every A = 25 µm.

The coupler 7 is made as a tapering. The parameters of the tapering are: b1=b2=5 mm, c=5mm. The fiber is tapered in a manner that d2 = 0.5 · d1.

The section of the single-core fiber 8 spliced to the double-core fiber is characterized by the same doping and core dimensions as cores 9.1 and 9.2 and is 75 µm long.

The fiber is prepared by immersing in a solution containing sulfuric acid and 30% perhydrol in a 3:1 ratio for an hour. A surface prepared in this manner is active and, after placing the fiber in a solution containing allylamine poly hydrochloride, a polymer layer 2 nm thick and with a refractive index of approx. 1.5 is connected to the fiber. Connecting a 2 nm layer causes a 0.5 nm shift of the stripes. The sensor is used to detect allylamine poly hydrochloride.

### Example 7

In a beneficial embodiment of the invention, the planar waveguide technology based on PLC splitters (Planar Lightwave Circuit splitter) is applied. Using an optical fiber 4, a source 1 is connected to a PLC splitter 14. One of the outputs of the splitter 13.1 is activated by applying initial layer 5 thicknesses, and the second splitter output 13.2 is factory by 40 µm and hidden inside the splitter's housing 14 to ensure the imbalance of the interferometer and stability of operation. The return arm of the splitter is connected to a decoder 2 by means of an optical fiber 4.

From the light source, signal is directed through an optical fiber leading to the splitter's input port. A detector is connected to the second input port through an input fiber. The detector preferably comprises an optical spectrum analyzer. Signal from the light source is divided by the PLC splitter and reflects off the layer and the tip of the extended arm, hidden in the housing. Reflecting off the tip and the layer, light returns on the same path, through the splitter. The detector displays interference stripes in a spectral band (wavelength), the shift and/or contrast of which depends on the change of optical thickness and/or the absorption of the layer. In this case, a change of the optical thickness of the measured layer changes the position of the interference stripes.

In this beneficial embodiment, an equal-power splitter 13 is used for a 1500nm wavelength and a 2x2 configuration. A tungsten bulb with a light color corresponding to a black body of 1900 K is used as the light source.

Signal from the light source 1 is directed through the input fiber 1 to the input splitter port. Detector 2 is connected to the second input splitter port by means of an input fiber 4. The detector is an optical spectrum analyzer. From the light source 1, the signal is split in the PLC splitter and is then reflected off the layer 5 and off the tip of the extended arm hidden in the housing 13.2. Reflecting off the tip 13.2 and the layer 5, light returns on the same path through the splitter 13. The detector displays interference stripes in a spectral band (wavelength), the shift and/or contrast of which depends on the change of optical thickness and/or the absorption of the layer 5. In this case, a change of the optical thickness of the measured layer 5 changes the position of the interference stripes.

The substance 5 applied on the output port is ethylcellulose with a refractive index of approx. 1.4. Substance 5 is applied on the port by immersing the double-core fiber in a 0.5% solution of butyl acetate, extracting it and drying. An optical fiber coated in this manner reacts to ethanol vapors, which cause it to swell. An approx. 50 nm change in the thickness of the layer causes the stripes to shift by approx. 10 nm.

## Claims

1. A waveguide interferometer for measuring physical parameters, whereby the waveguide interferometer contains a multicore waveguide (6), a light source (1) and a signal detector (2),
wherein the multicore waveguide (6) has at least a first core and a second core,
whereby a splitter (7, 13) is provided on the multicore waveguide (6), which is adapted to split a signal among the fiber cores,
whereby the light source (1) is arranged on a light feed side of the multicore waveguide (6) to feed light to one of the first and the second core of the multicore waveguide (6) and whereby
the at least first core and second core each have an output on an opposite side of the multicore waveguide (6),
wherein the output of at least one of the cores is activated by a coating with at least one chemically active substance (5, 5.1, 5.2), and one of the first and the second core is connected directly or indirectly to the signal detector (2) on the same side of the multicore waveguide to which light from the light source (1) is fed.

2. The interferometer according to claim 1, **characterized in that** the at least one chemically active substance (5) is connectable to another substance.

3. The interferometer according to claim 1 or 2, **characterized in that** the at least one chemically active substance (5), is detachable when exposed to environmental factors.

4. The interferometer according to claim 1 or 2 or 3, **characterized in that** the at least one chemically active substance (5), is selected so that it changes thickness and/or absorption and/or refractive index when exposed to environmental factors.

5. The interferometer according to any of the preceding claims, **characterized in that**, the multicore waveguide (6) has more than two cores.

6. The interferometer according to any of the preceding claims, **characterized in that** the first core of the multicore waveguide's (6) cores has a different length than the second core.

7. The interferometer according to any of the preceding claims, **characterized in that** the output of at least one core of the multicore waveguide (6) is activated by connecting at least one dielectric section (8), whereby the at least one dielectric section (8) is selected from a group including: glass pin, waveguide, optical fiber, connected thereto.

8. The interferometer according to the claim 5, **characterized in that** it has a fan-in/fan-out element (12) connected to the multicore waveguide (6) and more than one detector (2) , whereby the more than one detector (2) and the light source (1) are connected to the fan-in/fan-out element (12) .

9. The interferometer according to claim 1 or 2 or 3 or 4 or 6 or 7, **characterized in that** it has a circulator (3) having a first port (C.1) connected to the light source (1), a third port (C.3) connected to the signal detector (2) and a second port (C.2) connected to the multicore waveguide.

10. The interferometer according to any of the preceding claims, **characterized in that** at least two of the outputs of the cores of the multicore waveguide are coated with different chemically active substances (5.1, 5.2) .

11. The interferometer according to any of the preceding claims, **characterized in that** the multicore waveguide (6) is a polarization-maintaining waveguide.

12. The interferometer according to any of the preceding claims, **characterized in that**, the multicore waveguide (6) is a multicore fiber and comprises holes (10) between the first core and the second core.

13. The interferometer according to any of the claims from 1 to 12, **characterized in that** the splitter is a multicore fiber coupler (7) provided on the multicore waveguide (6) as a tapered area.

14. The interferometer according to any of the claims from 1 to 12, **characterized in that** the splitter is a planar lightwave circuit splitter (13) and the multicore waveguide is a planar lightwave circuit waveguide.

15. The interferometer according to any of the preceding claims, **characterized in that** the chemically active substance (5, 5.1, 5.2) comprises a substance selected of the group including yttrium oxide, perfluorinated polymer, hydrolyzed collagen, polystyrene, ethylcellulose.

## Patentansprüche

1. Ein Wellenleiter-Interferometer zur Messung physikalischer Parameter, wobei das Interferometer einen Mehrkern-Wellenleiter (6), eine Lichtquelle (1) und einen Signaldetektor (2) enthält, wobei der Mehrkern-Wellenleiter (6) mindestens einen ersten Kern und einen zweiten Kern aufweist, wobei auf dem Multicore-Wellenleiter (6) ein Splitter (7, 13) vorgesehen ist, der so angepasst ist, dass er ein Signal auf die Faserkerne aufteilt,
wobei die Lichtquelle (1) auf einer Lichteinspeiseseite des Mehrkern-Wellenleiters (6) angeordnet ist, um Licht an einen des ersten und des zweiten Kerns des Mehrkern-Wellenleiters (6) zu leiten, und wobei der mindestens erste Kern und der zweite Kern jeweils einen Ausgang auf der gegenüberliegenden Seite des Mehrkern-Wellenleiters (6) haben,
wobei der Ausgang mindestens eines der Kerne durch eine Beschichtung mit einer chemisch aktiven Substanz (5, 5.1, 5.2) aktiviert wird, und einer des ersten und des zweiten Kerns direkt oder indirekt verbunden ist mit dem Signaldetektor (2) auf derselben Seite des Multicore-Wellenleiters, dem Licht von der Lichtquelle (1) zugeführt wird.

2. Interferometer nach Anspruch 1, **dadurch gekennzeichnet, dass** der mindestens einer chemisch aktiven Substanz (5) mit einer andern Substanz verbunden werden kann.

3. Interferometer nach Anspruch 1 oder 2, **dadurch gekennzeichnet, dass** der mindestens einer chemisch aktiven Substanz (5) lösbar ist, wenn er Umweltfaktoren ausgesetzt wird.

4. Interferometer nach Anspruch 1 oder 2 oder 3, **dadurch gekennzeichnet, dass** der mindestens einer chemisch aktiven Substanz (5) so ausgewählt ist, dass er die Dicke und/oder Absorption und/oder den Brechungsindex ändert, wenn er Umweltfaktoren ausgesetzt wird.

5. Interferometer nach irgendeinem der vorhergehenden Ansprüche, **dadurch gekennzeichnet, dass** der Mehrkern-Wellenleiter (6) mehr als zwei Kerne hat.

6. Interferometer nach irgendeinem der vorherigen Ansprüche, **dadurch gekennzeichnet, dass** der erste Kern der Kerne des Multicore-Wellenleiters (6) eine andere Länge als der zweite Kern hat.

7. Interferometer nach irgendeinem der vorhergehenden Ansprüche, **dadurch gekennzeichnet, dass** der Ausgang von mindestens einem Kern des Mehrkern-Wellenleiters (6) durch Anschließen mindestens eines dielektrischen Abschnitts (8) aktiviert wird, wobei der mindestens eine dielektrische Abschnitt (8) ausgewählt ist aus einer Gruppe, bestehend aus: Glasstift, Wellenleiter, Lichtwellenleiter, der damit verbunden ist.

8. Interferometer nach Anspruch 5, **dadurch gekennzeichnet, dass** es ein an den Mehrkern-Wellenleiter (6) angeschlossenes Fan-in/Fan-out-Element (12) und mehr als einen Detektor (2) hat, wobei der mehr als eine Detektor (2) und die Lichtquelle (1) mit dem Fan-in/Fan-out-Element (12) verbunden sind.

9. Interferometer nach Anspruch 1 oder 2 oder 3 oder 4 oder 6 oder 7, **dadurch gekennzeichnet, dass** es einen Zirkulator (3) mit einem ersten Anschluss (C.1), der mit der Lichtquelle (1) verbunden ist, mit einem dritten Anschluss (C.3), der mit dem Signaldetektor (2) verbunden ist, und mit einem zweiten Anschluss (C.2), der mit dem Multicore-Wellenleiter verbunden ist, hat.

10. Interferometer nach irgendeinem der vorhergehenden Ansprüche, **dadurch gekennzeichnet, dass** mindestens zwei der Ausgänge der Kerne des Mehrkern-Wellenleiters mit unterschiedlichen chemischen Wirkstoffen (5.1, 5.2) beschichtet sind.

11. Interferometer nach irgendeinem der vorhergehenden Ansprüche, **dadurch gekennzeichnet, dass** der Mehrkern-Wellenleiter (6) ein polarisationserhaltender Wellenleiter ist.

12. Interferometer nach irgendeinem der vorhergehenden Ansprüche, **dadurch gekennzeichnet, dass** der Mehrkern-Wellenleiter (6) ein Mehrkernleiter ist und Löcher (10) zwischen dem ersten Kern und dem zweiten Kern umfasst.

13. Interferometer nach irgendeinem der Ansprüche von 1 bis 12, **dadurch gekennzeichnet, dass** der Splitter ein Mehrkern-Leiterkoppler (7) ist, der auf dem Mehrkern-Wellenleiter (6) als konischer Bereich bereitgestellt ist.

14. Interferometer nach irgendeinem der Ansprüche von 1 bis 12, **dadurch gekennzeichnet, dass** der Splitter ein planarer Lichtwellenkreis-Splitter (13) ist und der Mehrkern-Wellenleiter ein planarer Lichtwellenkreis-Wellenleiter ist.

15. Interferometer nach irgendeinem der vorhergehenden Ansprüche, **dadurch gekennzeichnet, dass** der chemisch aktiven Substanz (5, 5.1, 5.2) eine Substanz umfasst, die ausgewählt ist aus der Gruppe, bestehend aus Yttriumoxid, perfluoriertem Polymer, hydrolysiertem Kollagen, Polystyrol, Ethylcellulose.

## Revendications

1. Interféromètre à guide d'ondes pour la mesure de paramètres physiques, selon lequel l'interféromètre contient un guide d'ondes à âmes multiples (6), une source de lumière (1) et un détecteur de signal (2), dans lequel le guide d'ondes à âmes multiples (6) possède au moins une première et une deuxième âme, selon lequel un diviseur (7, 13) est ménagé sur le guide d'ondes à âmes multiples (6), qui est adapté pour diviser un signal entre les âmes de fibre
selon lequel la source de lumière (1) est agencée sur un côté d'apport de lumière du guide d'ondes à âmes multiples (6) pour apporter une lumière à l'une de la première et la deuxième âme du guide d'ondes à âmes multiples (6) et selon lequel les au moins première et deuxième âmes possèdent chacune une sortie sur le côté opposé du guide d'ondes à âmes multiples (6),
dans lequel la sortie d'au moins l'une des âmes est activée par un revêtement ayant au moins une substance chimiquement active (5, 5.1, 5.2), et l'une de la première et de la deuxième âme est reliée directement ou indirectement au détecteur de signal (2) sur le même côté du guide d'ondes à âmes multiples que celui auquel une lumière provenant de la source de lumière (1) est apportée.

2. Interféromètre selon la revendication 1, **caractérisé en ce que** l'au moins une substance chimiquement active (5) peut être reliée à une autre substance.

3. Interféromètre selon la revendication 1 ou 2, **caractérisé en ce que** l'au moins une substance chimiquement active (5) est détachable lorsqu'elle est exposée à des facteurs environnementaux.

4. Interféromètre selon la revendication 1, 2 ou 3, **caractérisé en ce que** l'au moins une substance chimiquement active (5) est sélectionnée de sorte qu'elle change d'épaisseur et/ou d'absorption et/ou d'indice de réfraction lorsqu'elle est exposée à des facteurs environnementaux.

5. Interféromètre selon l'une quelconque des revendications précédentes, **caractérisé en ce que** le guide d'ondes à âmes multiples (6) possède plus de deux âmes.

6. Interféromètre selon l'une quelconque des revendications précédentes, **caractérisé en ce que** la première âme des âmes du guide d'ondes à âmes multiples (6) possède une longueur différente de celle de la deuxième âme.

7. Interféromètre selon l'une quelconque des revendications précédentes, **caractérisé en ce que** la sortie d'au moins une âme du guide d'ondes à âmes multiples (6) est activée par la liaison d'au moins une section diélectrique (8), selon lequel l'au moins une section diélectrique (8) est sélectionnée parmi un groupe comportant : une broche en verre, un guide d'ondes, une fibre optique, relié(e) à celle-ci.

8. Interféromètre selon la revendication 5, **caractérisé en ce qu'**il possède un élément d'entrance/de sortance (12) relié au guide d'ondes à âmes multiples (6) et plus d'un détecteur (2), selon lequel le plus d'un détecteur (2) et la source de lumière (1) sont reliés à l'élément d'entrance/de sortance (12).

9. Interféromètre selon la revendication 1, 2, 3, 4, 6 ou 7, **caractérisé en ce qu'**il possède un circulateur (3) ayant un premier port (C.1) relié à la source de lumière (1), un troisième port (C.3) relié au détecteur de signal (2) et un deuxième port (C.2) relié au guide d'ondes à âmes multiples.

10. Interféromètre selon l'une quelconque des revendications précédentes, **caractérisé en ce qu'**au moins deux des sorties des âmes du guide d'ondes à âmes multiples sont revêtues avec différentes substances chimiquement actives (5.1, 5.2).

11. Interféromètre selon l'une quelconque des revendications précédentes, **caractérisé en ce que** le guide d'ondes à âmes multiples (6) est un guide d'ondes à maintien de polarisation.

12. Interféromètre selon l'une quelconque des revendications précédentes, **caractérisé en ce que** le guide d'ondes à âmes multiples (6) est une fibre à âmes multiples et comprend des trous (10) entre la première âme et la deuxième âme.

13. Interféromètre selon l'une quelconque des revendications 1 à 12, **caractérisé en ce que** le diviseur est un coupleur de fibre à âmes multiples (7) ménagé sur le guide d'ondes à âmes multiples (6) sous la forme d'une zone effilée.

14. Interféromètre selon l'une quelconque des revendications 1 à 12, **caractérisé en ce que** le diviseur est un diviseur à circuit à onde lumineuse planaire (13) et le guide d'ondes à âmes multiples est un guide d'ondes à circuit à onde lumineuse planaire.

15. Interféromètre selon l'une quelconque des revendications précédentes, **caractérisé en ce que** la substance chimiquement active (5, 5.1 , 5.2) comprend une substance sélectionnée parmi le groupe comportant l'oxyde d'yttrium, le polymère perfluoré, le collagène hydrolysé, le polystyrène, l'éthylcellulose.
